# EUROPEAN PATENT SPECIFICATION

(11) **EP 3 246 811 B1**
(45) Date of publication and mention of the grant of the patent: **14.09.2022**
(21) Application number: 15877486.9
(22) Date of filing: 30.01.2015
(51) Int. Cl.: G06F 21/57, G06F 21/53, G06F 21/51

(54) **DUAL SYSTEM BASED MOUNTING METHOD AND SYSTEM FOR EXTERNAL STORAGE DEVICE**
AUF EINEM DUALEN SYSTEM BASIERENDES VERFAHREN UND SYSTEM FÜR EXTERNE SPEICHERVORRICHTUNG
PROCÉDÉ ET SYSTÈME DE MONTAGE BASÉS SUR UN SYSTÈME DOUBLE POUR UN DISPOSITIF DE STOCKAGE EXTERNE

(30) Priority: 15.01.2015 CN 201510020601
(43) Date of publication of application: 22.11.2017
(73) Proprietor: Yulong Computer Telecommunication Scientific (Shenzhen) Co., Ltd., Shenzhen, Guangdong 518057 (CN)
(72) Inventor: ZOU, Zhangzhi, Shenzhen Guangdong 518057 (CN)
(74) Representative: Zaboliene, Reda
(86) International application number: PCT/CN2015/072008
(87) International publication number: WO 2016/112568

(56) References cited:
- CN-A- 101 452 405
- CN-A- 101 452 405
- CN-A- 103 049 327
- JP-B2- 5 491 972
- US-A1- 2009 210 531
- US-A1- 2011 271 088

## Description

### FIELD

The present disclosure relates to a technical field of communication, and specifically to a mounting method and a system of external storage based on a dual system.

### BACKGROUND

When using a dual system including an ordinary system and a security system, an external storage device (e.g., SD (Secure Digital Memory Card)) is only mounted on one operating system. If the external storage device is mounted on the ordinary system, the security system cannot operate the external storage device. If the external storage device is mounted on the security system, the ordinary system cannot operate the external storage device. When a user is using the security system and the external storage device is mounted on the ordinary system, if the user wants to use the external storage device in the security system, the user needs to manually switch to the ordinary system and unmount the external storage device in system settings of the ordinary system. Then the user manually switches to the security system and manually mounts the external storage device in system settings of the security system, vice versa. By using a prior method for mounting the external storage device, more than ten operations are executed by the user during a whole operating process, the operations is fussy and a user experience is bad.

JP5491972B2 discloses an active server 10X. The active server 10X includes: a processing distribution unit 11X configured for, when a processing accompanied by a file operation of a shared storage device 20 occurs, determining whether the processing is performed by the operation server 10X based on a CPU utility rate of the processing, and when the processing is determined to be performed by a standby server 10Y, transmitting a file operation instruction for performing the processing to the standby server 10Y; and a mount management unit 12X configured for un-mounting a storage area to be used for the processing in the shared storage device 20, and transmitting a mount instruction to the standby server 10Y. The standby server 10Y includes: a mount management unit 12Y configured for receiving the mount instruction and mounting the storage area to be used in the processing within the shared storage device 20; and a file operation unit 13Y configured for receiving the file operation instruction and performing the processing designated by the file operation instruction.

CN101452405A discloses a method for multiple operation systems using a given external equipment by means of time division applicable to a computer having multiple operation systems. Each operation system of the computer is provided with a management module used for managing a use state of the given external equipment in the operation system, so as to solve the problem that when the multiple operation systems access the given external equipment simultaneously, the given external equipment cannot be normally used, so that the hardware performance of the computer can keep a good state all the time.

US2009/210531A1 provides data sharing through virtual removable volumes. A virtual volume of a SAN (storage area network) is presented to clients as a virtual removable volume. A controlling application controls access of clients connected to the SAN to the virtual removable volume. The controlling application allows only one client at a time to access the virtual removable volume. The controlling application allows a first client to mount the virtual removable volume as a removable volume. The controlling application then causes the first client to unmount the virtual removable volume and allows a second client to mount the virtual removable volume as a removable volume. In this way, the first client and second client are able to share data via the virtual removable volume without causing corruption of data and without requiring a shared file system or physical transfer of removable media.

In conclusion, it is obvious that prior art has inconveniences and disadvantages, and it is needed to improve.

### SUMMARY

For the above drawbacks, the present disclosure provides a mounting method and system of external storage device based on dual system, operation steps of mounting the external storage device in the dual system are greatly simplified, so that it is convenient for users to utilize, and user experience is improved, as defined by the independent claims 1 and, respectively, 5. Further embodiments of the invention are defined by their respective dependent claims.

### BRIEF DESCRIPTION OF THE DRAWINGS

FIG. 1 is a structure schematic of a mounting system of an external storage based on a dual system of the present disclosure;
FIG. 2 is a preferable structure schematic of the mounting system of the external storage based on the dual system of the present disclosure;
FIG. 3 is a flowchart of a mounting method of an external storage based on a dual system of the present disclosure;
FIG. 4 is a preferable flowchart of the mounting method of the external storage based on the dual system of the present disclosure.

### DETAILED DESCRIPTION

For clarity of illustration of objectives, technical solutions and advantages of the present disclosure, drawings combined with detailed description illustrate the embodiments of the present disclosure hereinafter.

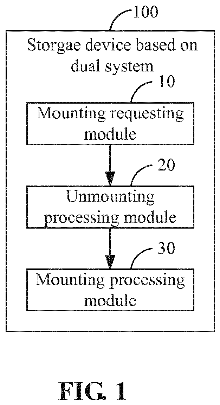

FIG. 1 is a structure schematic of a mounting system of the external storage based on the dual system of the present disclosure. The dual system includes a first operating system and a second operating system, the first operating system is a security system or an ordinary system, the second operating system is an ordinary system or a security system. A mounting system 100 is applied to communication terminals, such as a mobile phone, a PDA (Personal Digital Assistant), a tablet computer, and the like, and the mounting system 100 includes a mounting requesting module 10, an unmounting processing module 20 and a mounting processing module 30.

When an external storage device is mounted on the second operating system, the mounting requesting module 10 transmits a mounting request to the second operating system through the first operating system. The external storage device may be a SD (Secure Digital Memory Card), etc. Preferably, when a user is operating the security system and the external storage device is mounted on the ordinary system, if the user wants to mount the external storage device on the security system, the mounting request is transmitted to the ordinary system through the security system. Or when a user is operating the ordinary system, and the external storage device is mounted on the security system, if the user wants to mount the external storage device on the ordinary system, the mounting request is transmitted to the security system through the ordinary system. Specifically , the user may send the mounting request by clicking a predetermined icon, a menu item, or inputting a predetermined gesture in the first operating system.

When the second operating system receives the mounting request, the unmounting processing module 20 automatically unmounts the external storage device that is mounted on the second operating system. Preferably, when the ordinary system receives the mounting request from the security system, the external storage device mounted on the ordinary system is unmonted. Or when the security system receives the mounting request from the ordinary system, the external storage device mounted on the security system is unmonted.

When the second operating system successfully unmounts the external storage device, the mounting processing module 30 automatically mounts the external storage device on the first operating system. Preferably, when the ordinary system successfully unmounts the external storage device, the security system mounts the external storage device on the security system. Or when the security system successfully unmounts the external storage device, the ordinary system mounts the external storage device on the ordinary system.

It can be seen that the present disclosure can realize a quick mounting of the external storage device in the security system, and a quick mounting of the external storage device in the ordinary system. The security system is utilized to process voice services, data of the voice services is security and private data, such as, contacts, call logs, messages, and so on. The ordinary system is utilized to process data services, data of the data services is not security data, such as, browsing pages, watching online videos, and so on.

Combining with characterizations of the dual system, operation steps of mounting the external storage device in the dual system are greatly simplified, so that it is convenient for users to utilize, and user experience is improved.

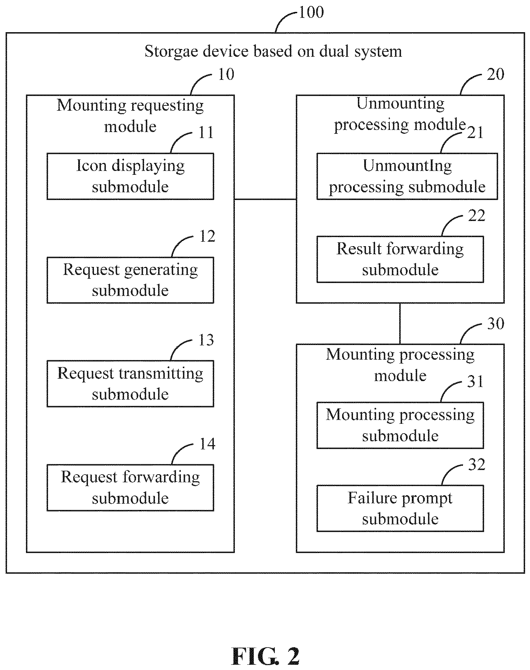

FIG. 2 is a preferable structure schematic of the mounting system of the external storage based on the dual system of the present disclosure. The dual system includes a first operating system and a second operating system, the first operating system is a security system or an ordinary system, the second operating system is an ordinary system or a security system. The mounting system 100 includes a mounting requesting module 10, an unmounting processing module 20 and a mounting processing module 30.

When an external storage device is mounted on the second operating system, the mounting requesting module 10 transmits a mounting request to the second operating system through the first operating system. Specifically, the user sends the mounting request by clicking a predetermined icon, an item or inputting a predetermined gesture.

When the second operating system receives the mounting request, the unmounting processing module 20 automatically unmounts the external storage device that is mounted on the second operating system.

When the second operating system successfully unmounts the external storage device, the mounting processing module 30 automatically mounts the external storage device on the first operating system.

Preferably, the mounting requesting module 10 includes:

An icon displaying submodule 11, which displays an one-click mounting icon in the first operating system.

A request generating submodule 12, which generates the mounting request and transmits the mounting request to the second operating system when the one-click mounting icon receives a predetermined touch instruction.

For example, the one-click mounting icon is separately added on a desktop of the ordinary system and a desktop of the security system, the desktop ordinary system uses a square icon, the security system uses a shield icon. The user can do mounting operation with clicking one button by the one-click mounting icon. For example, when the user clicks the one-click mounting icon of the security system, the external storage device mounted on the ordinary system is automatically unmounted, and the external storage device is automatically mounted on the security system. Whereas, if the user is using the ordinary system, the external storage device is mounted on the security system, and the user thinks of using the external storage device in the ordinary system, the user clicks the one-click mounting icon of the ordinary system, a mounting processing procedure of the ordinary system is the same as a mounting processing procedure of the security system. Whereby, a mount by clicking one button of the external storage device can be realized in the security system or the ordinary system.

Preferably, the mounting requesting module 10 includes:

A request transmitting submodule 13, which transmits the mounting request to a communal unit through the first operating system. The first operating system and the second operating system are not completely isolated in the dual system of the communication terminal, the first operating system and the second operating system communicates with each other through the communal unit of the dual system. When the communication terminal starts, the external storage device is mounted on the ordinary system by default. Preferably, if the user is using the security system and the storage device is mounted on the ordinary system, and if the user wants to utilize the external storage device in the security system, the security system is controlled to generate the mounting request and the mounting request is broadcasted to the communal unit of the dual system. If the user is using the ordinary system, the storage device is mounted on the security system and the user wants to utilize the external storage device in the ordinary system, and if the security system is controlled to generate the mounting request and the mounting request is broadcasted to the communal unit of the dual system.

A request forwarding submodule 14, which forwards the mounting request to the second operating system through the communal unit of the dual system. Preferably, after the communal unit of the dual system receives a broadcast of the mounting request of the security system, the mounting request is broadcasted to the ordinary system. Or after the communal unit of the dual system receives a broadcast of the mounting request of the ordinary system, the mounting request is broadcasted to the security system.

The unmounting processing module 20 includes:

An unmounting processing submodule 21, which automatically unmounts the external storage device that is mounted on the second operating system and transmits a unmounting result to the communal unit of the dual system, when the second operating system receives the mounting request. For example, while the external storage device of the second operating system is being unmounted, and if a user of the second operating system is processing the external storage device, at this point, an unmounting failure occurs. Preferably, the external storage device mounted on the ordinary system is being unmounted when the ordinary system receives the broadcast of the mounting request. Then regardless of whether the unmounting result is successful or unsuccessful, the unmounting result is broadcasted to the communal unit of the dual system. Or the external storage device mounted on the security system is being unmounted when the security system receives the broadcast of the mounting request. Then regardless of whether the unmounting result is successful or unsuccessful, the unmounting result is broadcasted to the communal unit of the dual system.

A result forwarding submodule 22, which forwards the unmounting result to the first operating system through the communal unit of the dual system. Preferably, the communal unit of the dual system broadcasts the unmounting result to the security system after receiving the unmounting result. Or the communal unit of the dual system broadcasts the unmounting result to the ordinary system after receiving the unmounting result.

The mounting processing module 30 includes:

A mounting processing submodule 31, which automatically mounts the external storage device on the first operating system, when the first operating system receives the unmounting result that the external storage device is unmounted successfully. Preferably, the external storage device is automatically mounted on the security system when the security system receives the unmounting result, the ordinary system unmounts the external storage device successfully. Or the external storage device is automatically mounted on the ordinary system when the ordinary system receives the unmounting result, the security system unmounts the external storage device successfully. Better still, the user is prompted that the mount is finished when the first operating system finishes the mount.

A failure prompt submodule 32, which outputs an unmounting failure prompt, when the first operating system has received the unmounting result representing that the external storage device is unmounted unsuccessfully. Preferably, the unmounting failure prompt can prompts the user that the ordinary system has unmounted the external storage device unsuccessfully, and the user is prompted to manually unmount the external storage device by switching to the ordinary system. Preferably, the unmounting result is outputted when the security system has received the unmounting result representing that the external storage device is unmounted unsuccessfully. Or the unmounting failure prompt is outputted when the ordinary system has received the unmounting result representing that the external storage device is unmounted unsuccessfully.

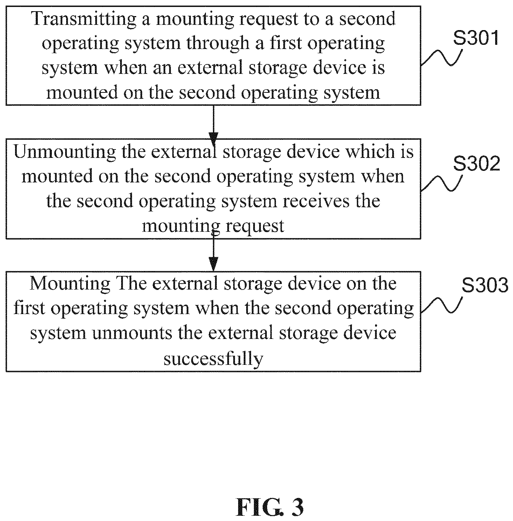

FIG. 3 shows a schematic flowchart of a mounting method of the external storage based on the dual system of the present disclosure. The dual system includes a first operating system and a second operating system, the first operating system is a security system or an ordinary system, the second operating system is a ordinary system or a security system. The mounting method can be executed through the mounting system 100 shown in FIG.1 or FIG. 2. The mounting method includes:

Step S301, when the external storage device is mounted on the second operating system, a mounting request is transmitted to the second operating system through the first operating system.

The external storage device is SD(Secure Digital Memory Card), etc. Preferably, when a user is operating the security system and the external storage device is mounted on the ordinary system, if the user wants to mount the external storage device on the security system, the mounting request is transmitted to the ordinary system through the security system. Or when a user is operating the ordinary system, and the external storage device is mounted on the security system, if the user wants to mount the external storage device on the ordinary system, the mounting request is transmitted to the security system through the ordinary system. Specifically, the user sends the mounting request by clicking a predetermined icon, a menu item or inputting a predetermined gesture in the first operating system.

Step S302, when the second operating system receives the mounting request, the external storage device that is mounted on the second operating system is automatically unmounted.

Preferably, when the ordinary system receives the mounting request from the security system, the external storage device that is mounted on the ordinary system is unmonted. Or when the security system receives the mounting request from the ordinary system, the external storage device mounted on the security system is unmonted.

Step S303, when the second operating system successfully unmounts the external storage device, the external storage device is automatically mounted on the first operating system.

Preferably, when the ordinary system successfully unmounts the external storage device, the security system mounts the external storage device on the security system. Or when the security system successfully unmounts the external storage device, the ordinary system mounts the external storage device on the ordinary system.

It can be seen that the present disclosure can realize to a quick mounting of the external storage device in the security system, and a quick mounting of the external storage device in the ordinary system. The security system is utilized to process voice services, data of the voice services is security data and private data, such as, contacts, call logs, messages, and so on. The ordinary system is utilized to process data services, data of the data services is not security data, such as, browsing pages, watching online videos, and so on.

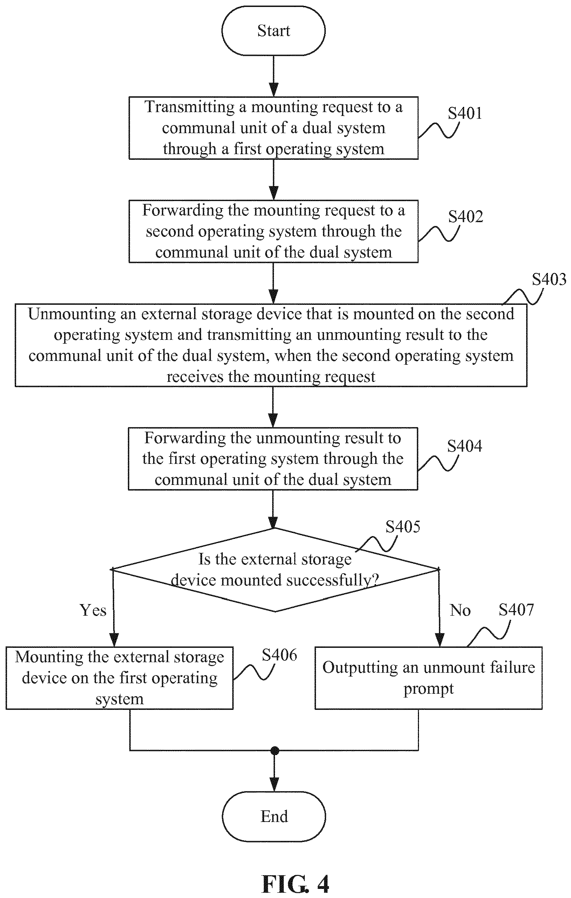

FIG. 4 shows a preferable schematic flowchart of the mounting method of the external storage based on the dual system of the present disclosure. The dual system includes a first operating system and a second operating system, the first operating system is a security system or a ordinary system, and the second operating system is an ordinary system or a security system. The mounting method can be executed through the mounting system 100 shown in FIG. 2. The mounting method includes:

Step S401, a mounting request is transmitted to a communal unit of the dual system through the first operating system.

The step preferably includes: displaying an one-click mounting icon in the first operating system; generating the mounting request and transmitting the mounting request to the second operating system when the one-click mounting icon receives a predetermined touch instruction.

For example, the one-click mounting icon is separately added on a desktop of the ordinary system and a desktop of the security system, the desktop ordinary system uses a square icon, the security system uses a shield icon. The user can do mounting operation with clicking one button by the one-click mounting icon. For example, when the user clicks the one-click mounting icon of the security system, the external storage device mounted on the ordinary system is automatically unmounted, and the external storage device is automatically mounted on the security system. Whereas, if the user is using the ordinary system, the external storage device is mounted on the security system, and the user thinks of using the external storage device in the ordinary system, the user clicks the one-click mounting icon of the ordinary system, a mounting processing procedure of the ordinary system is the same as a mounting processing procedure of the security system.

The first operating system and the second operating system are not completely isolated in the dual system of the communication terminal, the first operating system and the second operating system communicates with each other through the communal unit of the dual system. When the communication terminal starts, the external storage device is mounted on the ordinary system by default. Preferably, if the user is using the security system and the storage device is mounted on the ordinary system, and if the user thinks of utilizing the external storage device in the security system, the security system is controlled to generate the mounting request and the mounting request is broadcasted to the communal unit of the dual system. If the user is using the ordinary system, the storage device is mounted on the security system and the user thinks of utilizing the external storage device in the ordinary system, and if the security system is controlled to generate the mounting request and the mounting request is broadcasted to the communal unit of the dual system.

Step S402, the mounting request is forwarded to the second operating system through the communal unit of the dual system.

Preferably, after the communal unit of the dual system receives a broadcast of the mounting request of the security system, the mounting request is broadcasted to the ordinary system. Or after the communal unit of the dual system receives a broadcast of the mounting request of the ordinary system, the mounting request is broadcasted to the security system.

Step S403, when the second operating system receives the mounting request, the external storage device that is mounted on the second operating system is automatically unmounted and an unmounting result is transmitted to the communal unit of the dual system.

Preferably, the external storage device mounted on the ordinary system is being unmounted when the ordinary system receives the broadcast of the mounting request. Then regardless of whether the unmounting result is successful or unsuccessful, the unmounting result is broadcasted to the communal unit of the dual system. Peradventure, the external storage device mounted on the security system is being unmounted when the security system receives the broadcast of the mounting request. Then regardless of whether the unmounting result is successful or unsuccessful, the unmounting result is broadcasted to the communal unit of the dual system.

Step S404, the unmounting result is forwarded to the first operating system through the communal unit of the dual system.

Preferably, the communal unit of the dual system broadcasts the unmounting result to the security system after receiving the unmounting result. Or the communal unit of the dual system broadcasts the unmounting result to the ordinary system after receiving the unmounting result.

Step S405, it is determined that whether the unmounting result is that the external storage device is unmounted successfully, if yes, a step S406 is executed; if no, a step S407 is executed.

For example, while the external storage device of the second operating system is being unmounted, and if a user of the second operating system is processing the external storage device, at this point, an unmounting failure occurs.

Step S406, when the first operating system receives the unmounting result that the external storage device is unmounted successfully, the external storage device is automatically mounted on the first operating system.

Preferably, the external storage device is automatically mounted on the security system when the security system receives the unmounting result, the ordinary system unmounts the external storage device successfully. Or the external storage device is automatically mounted on the ordinary system when the ordinary system receives the unmounting result, the security system unmounts the external storage device successfully. Better still, the user is prompted that the mount is finished when the first operating system finishes the mount.

Step S407, when the first operating system has received the unmounting result that the external storage device is unmounted unsuccessfully, an unmounting failure prompt is outputted.

Preferably, the unmounting failure prompt can prompts the user that the ordinary system has unmounted the external storage device unsuccessfully, and the user is prompted to manually unmount the external storage device by switching to the ordinary system. Preferably, the unmounting result is outputted when the security system has received the unmounting result representing that the external storage device is unmounted unsuccessfully. Or the unmounting failure prompt is outputted when the ordinary system has received the unmounting result representing that the external storage device is unmounted unsuccessfully.

In conclusion, the present disclosures provides a new way of mounting the external storage device of the dual system. When the user is using the first operating system and the external storage device is mounted on the second operating system, and if the user wants mounting the external storage device on the first operating system, the mounting request is directly transmitted to the second operating system through the first operating system. The external storage device that is mounted on the second operating system is unmounted, and after unmounting the external storage device successfully, the external storage device is mounted on the first operating system. Operation steps of mounting the external storage device in the dual system are greatly simplified, so that it is convenient for users to utilize, and user experience is improved.

## Claims

1. A mounting method of an external storage device based on a dual system of a same communication terminal, wherein the dual system comprises a first operating system and a second operating system, the mounting method comprising:
transmitting a mounting request to the second operating system through the first operating system when the external storage device is mounted on the second operating system;
unmounting the external storage device that is mounted on the second operating system when the second operating system receives the mounting request;
mounting the external storage device on the first operating system when the second operating system unmounts the external storage device successfully;
the mounting method being **characterised in that**:
the step of transmitting a mounting request to the second operating system through the first operating system comprises:
transmitting the mounting request to a communal unit of the dual system through the first operating system;
forwarding the mounting request to the second operating system through the communal unit of the dual system;
when the second operating system receives the mounting request, the step of unmounting the external storage device that is mounted on the second operating system comprises:
unmounting the external storage device that is mounted on the second operating system and transmitting an unmounting result to the communal unit of the dual system, when the second operating system receives the mounting request;
forwarding the unmounting result to the first operating system through the communal unit of the dual system;
when the second operating system successfully unmounts the external storage device, the step of mounting of the external storage device on the first operating system comprises:
mounting the external storage device on the first operating system, when the first operating system receives the unmounting result representing that the external storage device is unmounted successfully.

2. The mounting method of claim 1, wherein the step of transmitting the mounting request to the second operating system through the first operating system by:
displaying a one-click mounting icon in the first operating system;
generating the mounting request and transmitting the mounting request to the second operating system when the one-click mounting icon receives a predetermined touch instruction.

3. The mounting method of claim 1, wherein the first operating system is a security system or an ordinary system, and the second operating system is an ordinary system or a security system.

4. The mounting method of claim 1, after the step of forwarding the unmounting resulting to the first operating system through the communal unit of the dual system, further comprising:
outputting an unmounting failure prompt, when the first operating system receives the unmounting result representing that the external storage device is unmounted unsuccessfully.

5. A mounting system (100) of external storage device based on a dual system of a same communication terminal, wherein the dual system (100) comprises a first operating system and a second operating system, the mounting system (100) comprising:
a mounting requesting module (10) configured to transmit a mounting request to the second operating system through the first operating system when the external storage device is mounted on the second operating system;
an unmounting processing module (20) configured to unmount the external storage device that is mounted on the second operating system when the second operating system receives the mounting request;
a mounting processing module (30) configured to mount the external storage device on the first operating system when the second operating system unmounts the external storage device successfully;
the mounting system (100) being **characterised in that**:
the mounting requesting module (10) comprises:
a request transmitting submodule (13) configured to transmit the mounting request to a communal unit of the dual system through the first operating system;
a request forwarding submodule (14) configured to forward the mounting request to the second operating system through the communal unit of the dual system;
the unmounting processing module (20) comprises:
an unmounting processing submodule (21) configured to unmount the external storage device that is mounted on the second operating system and transmit a unmounting result to the communal unit of the dual system, when the second operating system receives the mounting request;
a result forwarding submodule (22) configured to forward the unmounting result to the first operating system through the communal unit of the dual system;
the mounting processing module (30) comprises:
a mounting processing submodule (31) configured to mount the external storage device on the first operating system, when the first operating system receives the unmounting result representing that the external storage device is unmounted successfully.

6. The mounting system (100) of claim 5, wherein the mounting requesting module (10) comprises:
an icon displaying submodule (11) configured to display a one-click mounting icon in the first operating system;
a request generating submodule (12) configured to generate the mounting request and transmit the mounting request to the second operating system when the one-click mounting icon receives a predetermined touch instruction.

7. The mounting system (100) of claim 5 wherein the first operating system is a security system or an ordinary system, and the second operating system is an ordinary system or a security system.

8. The mounting system (100) of claim 5, wherein the mounting processing module (30) compri ses:
a failure prompt submodule (32) configured to output an unmounting failure prompt, when the first operating system has received the unmounting result representing that the external storage device is unmounted unsuccessfully.

## Patentansprüche

1. Mountverfahren einer externen Speichervorrichtung basierend auf einem dualen System eines gleichen Kommunikationsendgeräts, wobei das duale System ein erstes Betriebssystem und ein zweites Betriebssystem umfasst, wobei das Mountverfahren Folgendes beinhaltet:
Übertragen einer Mount-Anfrage an das zweite Betriebssystem durch das erste Betriebssystem, wenn die externe Speichervorrichtung auf dem zweiten Betriebssystem gemounted ist;
Ausbau des externen Speichergeräts, das auf dem zweiten Betriebssystem montiert ist, wenn das zweite Betriebssystem die Mount - Anforderung empfängt;
Mounten des externen Speichergeräts auf dem ersten Betriebssystem, wenn das zweite Betriebssystem das externe Speichergerät erfolgreich ausbaut;
wobei das Mountverfahren **dadurch gekennzeichnet** ist
der Schritt des Übertragens einer Mount-Anfrage an das zweite Betriebssystem durch das erste Betriebssystem umfasst:
Übertragen der Mount - Anforderung an eine gemeinsame Einheit des dualen Systems durch das erste Betriebssystem;
Weiterleiten der Mount - Anforderung an das zweite Betriebssystem durch die gemeinsame Einheit des dualen Systems;
wenn das zweite Betriebssystem die Mount-Anfrage empfängt, umfasst der Schritt des Ausbaus der externen Speichervorrichtung, die auf dem zweiten Betriebssystem gemountet ist:
Unmounten des externen Speichergeräts, das auf dem zweiten Betriebssystem gemountet ist, und Übertragen eines Unmount-Ergebnisses an die gemeinsame Einheit des dualen Systems, wenn das zweite Betriebssystem die Mount-Anfrage empfängt;
Weiterleiten des Unmount-Ergebnisses an das erste Betriebssystem durch die gemeinsame Einheit des dualen Systems;
wenn das zweite Betriebssystem das externe Speichergerät erfolgreich unmountet, umfasst der Schritt des Mountens des externen Speichergeräts auf dem ersten Betriebssystem:
Einhängen des externen Speichergeräts in das erste Betriebssystem, wenn das erste Betriebssystem das Aushängeergebnis empfängt, das darstellt, dass das externe Speichergerät erfolgreich ausgehängt wurde.

2. Mountverfahren nach Anspruch 1, wobei der Schritt des Übertragens der Mount - Anforderung an das zweite Betriebssystem durch das erste Betriebssystem durch:
Anzeigen eines Ein-Klick-Mounting-Icons im ersten Betriebssystem;
Erzeugen der Mount - Anfrage und Übertragen der Mount - Anfrage an das zweite Betriebssystem, wenn das Ein-Klick-Mounting-Icon eine vorbestimmte Berührungsanweisung empfängt.

3. Mountverfahren nach Anspruch 1, wobei das erste Betriebssystem ein Sicherheitssystem oder ein gewöhnliches System ist und das zweite Betriebssystem ein gewöhnliches System oder ein Sicherheitssystem ist.

4. Mountverfahren nach Anspruch 1, nach dem Schritt des Weiterleitens des Unmount-Ergebnisses an das erste Betriebssystem durch die gemeinsame Einheit des dualen Systems, ferner umfassend:
Ausgeben einer Unmounting-Fehleraufforderung, wenn das erste Betriebssystem das Unmounting-Ergebnis empfängt, das darstellt, dass das externe Speichergerät erfolglos unmountet wurde.

5. Mount - System (100) einer externen Speichervorrichtung basierend auf einem dualen System eines gleichen Kommunikationsendgeräts, wobei das duale System (100) ein erstes Betriebssystem und ein zweites Betriebssystem umfasst, wobei das Mount - System (100) umfasst:
ein Mount-Anforderungsmodul (10), das so konfiguriert ist, dass es eine Mount-Anfrage an das zweite Betriebssystem durch das erste Betriebssystem sendet, wenn die externe Speichervorrichtung auf dem zweiten Betriebssystem installiert ist;
ein Unmount-Verarbeitungsmodul (20), das dafür konfiguriert ist, das externe Speichergerät, das auf dem zweiten Betriebssystem gemountet ist, zu unmounten, wenn das zweite Betriebssystem die Mount-Anfrage empfängt;
ein Mount-Verarbeitungsmodul (30), das dafür konfiguriert ist, das externe Speichergerät auf dem ersten Betriebssystem zu mounten, wenn das zweite Betriebssystem das externe Speichergerät erfolgreich unmountet;
wobei das Befestigungssystem (100) **dadurch gekennzeichnet ist, dass**:
Das Mount-Anforderungsmodul (10) besteht aus:
ein Anforderungsübertragungs-Untermodul (13), das so konfiguriert ist, dass es die Mountanforderung über das erste Betriebssystem an einen allgemeinen PC des dualen Systems überträgt;
ein Anforderungsweiterleitungs-Untermodul (14), das so konfiguriert ist, dass es die Mountanforderung über die gemeinsame Einheit des dualen Systems an das zweite Betriebssystem weiterleitet;
das Unmount-Verarbeitungsmodul (20) umfasst:
ein Unmount-Verarbeitungsmodul (21), das dazu konfiguriert ist, das externe Speichergerät zu unmounten, das auf dem zweiten Betriebssystem gemountet ist, und ein Unmount -Ergebnis an die gemeinsame Einheit des dualen Systems zu übertragen, wenn das zweite Betriebssystem die Mountanforderung empfängt;
ein Ergebnisweiterleitungs-Untermodul (22), das so konfiguriert ist, dass es das Unmount-Ergebnis über die gemeinsame Einheit des dualen Systems an das erste Betriebssystem weiterleitet;
das Mount- Verarbeitungsmodul (30) umfasst:
ein Mount-Verarbeitungssubmodul (31), das konfiguriert ist, um das externe Speichergerät auf dem ersten Betriebssystem zu mounten, wenn das erste Betriebssystem das Unmount-Ergebnis empfängt, das darstellt, dass das externe Speichergerät erfolgreich unmountet wurde.

6. Mount- System (100) nach Anspruch 5, wobei das Mount-Anforderungsmodul (10) umfasst:
ein Symbol, das ein Submodul (11) anzeigt, das so konfiguriert ist, dass es ein Ein-Klick- Mount-Symbol in dem anzeigt
erstes Betriebssystem;
ein Anforderungserzeugungs-Untermodul (12), das so konfiguriert ist, dass es die Mount-Anforderung erzeugt und die Mount-Anforderung an das zweite Betriebssystem überträgt, wenn das Ein-Klick-M Mount-Icon eine vorbestimmte Berührungsanweisung empfängt.

7. Mount-System (100) nach Anspruch 5, wobei das erste Betriebssystem ein Sicherheitssystem oder ein gewöhnliches System ist und das zweite Betriebssystem ein gewöhnliches System oder ein Sicherheitssystem ist.

8. Mount-System (100) nach Anspruch 5, wobei das Mount-Verarbeitungsmodul (30) umfasst:
ein Fehleraufforderung - Submodul (32), das so konfiguriert ist, dass es eine Aushänge-Fehleraufforderung ausgibt, wenn das erste Betriebssystem das Aushängeergebnis empfangen hat, das darstellt, dass die externe Speichervorrichtung erfolglos ausgehängt wurde.

## Revendications

1. Un procédé de montage d'un dispositif de stockage externe basé sur un système double d'un même terminal de communication, dans lequel le système double comprend un premier système d'exploitation et un second système d'exploitation, le procédé de montage comprenant :
la transmission d'une demande de montage au second système d'exploitation par l'intermédiaire du premier système d'exploitation lorsque le dispositif de stockage externe est monté sur le second système d'exploitation ;
le démontage du dispositif de stockage externe qui est monté sur le second système d'exploitation lorsque le second système d'exploitation reçoit la demande de montage ;
le montage du dispositif de stockage externe sur le premier système d'exploitation lorsque le second système d'exploitation démonte le dispositif de stockage externe avec succès ;
le procédé de montage étant **caractérisé par le fait que**
l'étape consistant à transmettre une demande de montage au second système d'exploitation par l'intermédiaire du premier système d'exploitation comprend :
la transmission de la demande de montage à une unité commune du système double par l'intermédiaire du premier système d'exploitation ;
la transmission de la demande de montage au second système d'exploitation par l'intermédiaire de l'unité commune du système double ;
lorsque le second système d'exploitation reçoit la demande de montage, l'étape de démontage du dispositif de stockage externe qui est monté sur le second système d'exploitation comprend :
le démontage du dispositif de stockage externe qui est monté sur le second système d'exploitation et la transmission d'un résultat de démontage à l'unité commune du système double, lorsque le second système d'exploitation reçoit la demande de montage ;
la transmission du résultat de démontage au premier système d'exploitation par l'intermédiaire de l'unité commune du système double ;
lorsque le second système d'exploitation démonte avec succès le dispositif de stockage externe, l'étape de montage du dispositif de stockage externe sur le premier système d'exploitation comprend :
le montage du dispositif de stockage externe sur le premier système d'exploitation, lorsque le premier système d'exploitation reçoit le résultat de démontage indiquant que le dispositif de stockage externe est démonté avec succès.

2. Le procédé de montage selon la revendication 1, dans laquelle l'étape de transmission de la demande de montage au second système d'exploitation par l'intermédiaire du premier système d'exploitation par :
l'affichage d'une icône de montage en un clic dans le premier système d'exploitation ;
la génération de la demande de montage et la transmission de la demande de montage au second système d'exploitation lorsque l'icône de montage en un clic reçoit une instruction tactile prédéterminée.

3. Le procédé de montage selon la revendication 1, dans laquelle le premier système d'exploitation est un système de sécurité ou un système ordinaire, et le second système d'exploitation est un système ordinaire ou un système de sécurité.

4. Le procédé de montage selon la revendication 1, après l'étape de transmission du démontage résultant au premier système d'exploitation via l'unité commune du système double, comprenant en outre :
la délivrance d'une invite d'échec de démontage, lorsque le premier système d'exploitation reçoit le résultat de démontage indiquant que le dispositif de stockage externe est démonté sans succès.

5. Le système de montage (100) d'un dispositif de stockage externe basé sur un système double d'une même borne de communication, dans laquelle le système double (100) comprend un premier système d'exploitation et un second système d'exploitation, le système de montage (100) comprenant :
un module de demande de montage (10) configuré pour la transmission d'une demande de montage au second système d'exploitation par l'intermédiaire du premier système d'exploitation lorsque le dispositif de stockage externe est monté sur le second système d'exploitation ;
un module de traitement de démontage (20) configuré pour le démontage du dispositif de stockage externe qui est monté sur le second système d'exploitation lorsque le second système d'exploitation reçoit la demande de montage ;
un module de traitement de montage (30) configuré pour monter le dispositif de stockage externe sur le premier système d'exploitation lorsque le second système d'exploitation démonte le dispositif de stockage externe avec succès ;
le système de montage (100) étant **caractérisé par le fait que** :
le module de demande de montage (10) comprend :
un sous-module de transmission de demande (13) configuré pour transmettre la demande de montage à un esprit commun du système double via le premier système d'exploitation ;
un sous-module de transmission de demande (14) configuré pour transmettre la demande de montage au deuxième système d'exploitation par l'intermédiaire de l'unité commune du système double ;
le module de traitement de démontage (20) comprend :
un sous-module de traitement de démontage (21) configuré pour le démontage du dispositif de stockage externe qui est monté sur le second système d'exploitation et la transmission d'un résultat de démontage à l'unité commune du système double, lorsque le deuxième système d'exploitation reçoit la demande de montage ;
un sous-module de transfert de résultat (22) configuré pour la transmission du résultat de démontage au premier système d'exploitation via l'unité commune du système double ;
le module de traitement de montage (30) comprend :
un sous-module de traitement de montage (31) configuré pour le montage du dispositif de stockage externe sur le premier système d'exploitation, lorsque le premier système d'exploitation reçoit le résultat de démontage indiquant que le dispositif de stockage externe est démonté avec succès.

6. Le système de montage (100) selon la revendication 5, dans laquelle le module de demande de montage (10) comprend :
un sous-module d'affichage d'icône (11) configuré pour afficher une icône de montage en un clic dans le premier système d'exploitation ;
un sous-module de génération de demande (12) configuré pour générer la demande de montage et transmettre la demande de montage au second système d'exploitation lorsque l'icône de montage en un clic reçoit une instruction tactile prédéterminée.

7. Le système de montage (100) selon la revendication 5 dans laquelle le premier système d'exploitation est un système de sécurité ou un système ordinaire, et le second système d'exploitation est un système ordinaire ou un système de sécurité.

8. Le système de montage (100) selon la revendication 5, dans laquelle le module de traitement de montage (30) comprend :
un sous-module d'invite d'échec (32) configuré pour émettre une invite d'échec de démontage, lorsque le premier système d'exploitation a reçu le résultat de démontage indiquant que le dispositif de stockage externe est démonté sans succès.
